# EUROPEAN PATENT SPECIFICATION

(11) **EP 0 651 493 B1**
(45) Date of publication and mention of the grant of the patent: **02.04.1997**
(21) Application number: 94202951.3
(22) Date of filing: 12.10.1994
(51) Int. Cl.: H02J 3/00, A01G 9/24

(54) **Arrangement for the generation of electric energy**
Anordnung zur Erzeugung von elektrischer Energie
Dispositif pour la génération d'énergie électrique

(30) Priority: 29.10.1993 BE 9301169
(43) Date of publication of application: 03.05.1995
(73) Proprietor: VLAAMSE INSTELLING VOOR TECHNOLOGISCH ONDERZOEK, afgekort V.I.T.O., onderneming van openbaar nut onder de vorm van een n.v., 2400 Mol (BE)
(72) Inventor: van Tichelen, Paul, B-3001 Heverlee (BE)
(74) Representative: Debrabandere, René

(56) References cited:
- EP-A- 0 080 764
- FR-A- 2 294 580
- US-A- 4 686 375

## Description

The invention relates to an arrangement for the generation of electric energy, which arrangement comprises a driving device, at least two current generators and a coupling between this driving device and these current generators.

The driving device is for instance with internal combustion and may consist of a combustion engine, for example a diesel engine, or a gas turbine. This driving device also creates heat which can be used.

An arrangement for the generation of electric energy of the aforementioned type is known from US-A-4 686 375. This arrangement serves for guaranteeing the current supply. A first electromechanical current generator continuously feeds a first load while a second electromechanical current generator supplies current to a second load only if necessary. Both current generators, however, supply the same current with the same well-defined frequency. In practice, this frequency is generally chosen equal to the frequency of the public electric network, i.e. 50 or 60 Hz.

In this last case, one of the current generators should be able to supply into the public network. This can be economically interesting, for example, if the driving device with internal combustion is part of a heat/power coupling installation, which is an installation using electric as well as thermic energy.

For some applications it will be more efficient to use current at another, mostly higher, frequency. This may sometimes lead to more compact devices and a higher global electric efficiency. A practical example for this is the supply of an illumination system with high-pressure sodium discharge lamps. At a higher frequency, the value of the ballast and of the compensation capacitor diminishes. Thus, the price of the illumination system may drop considerably, while the use of smaller ballasts minimizes the electric losses.

The invention aims at providing such an arrangement for the generation of electric energy with an optimum global efficiency.

To this aim, the two current generators are generators having different frequencies.

Thus, the most efficient frequency can be chosen for different appliances, by chosing the generator which supplies the current. In this manner, current with a higher frequency than the frequency of the mains supply can be obtained, when this current has to be transported only over a short distance. The transport of current with a high frequency over major distances is difficult because of the line induction.

Suitably, one current generator is a generator supplying current with the frequency of the public network, while the other current generator is a generator supplying current at a higher frequency.

This higher frequency, for example, can be 400 +/- 40 Hz. Generators delivering such frequency are already commercially available.

The two current generators may be electromechanical current generators, or one current generator may be an tromechanical one and the other may be formed by an tromechanical current generator and an electronic frequency-transformer.

The coupling with which the current generators are connected to the driving device is, for example, of the type that can be uncoupled, while one of the current generators is connected to the public network.

In this embodiment, the driving device can be uncoupled from the current generators, and the current generator which is connected to the network can be used as motor for driving the other current generator.

In an advantageous embodiment of the invention, the driving device is part of a heat/power coupling installation.

Especially in this embodiment with a demand for heat as well as an electric consumption, a high global efficiency can be achieved.

Further particularities and advantages of the invention will result from the following description of an arrangement for the generation of electric energy according to the invention. This description is only given by means of example and does not limit the invention. The reference numbers refer to the herewith enclosed drawings wherein:
figure 1 schematically shows an arrangement for the generation of electric energy according to the invention;
figure 2 schematically shows an arrangement similar to the one according to figure 1, but with respect to another form of embodiment.

The arrangement for the generation of electric energy, shown in the figures, serves for the generation of energy for a green house and principially comprises a driving device with internal combustion, formed by a combustion engine 1, a current generator 2 with a frequency of 50 Hz and a current generator 3 with a frequency of 400 +/- 40 Hz.

The combustion engine 1 is part of a heat/power coupling installation which is mounted at the green house. The residual heat of the combustion engine 1, which, for example, is a gas or diesel engine, is used for heating the green house, by using a heat exchanger 14 and radiators 15.

The power of this combustion engine 1 is used for driving the current generators 2 and 3. The current generator 2 is an electromechanical current generator which is connected over a pneumatically controllable coupling 4 to the output shaft of the combustion engine 1. Electrically, this current generator 2 is connected to the public A.C. network 6 with 50 Hz by means of lines 5.

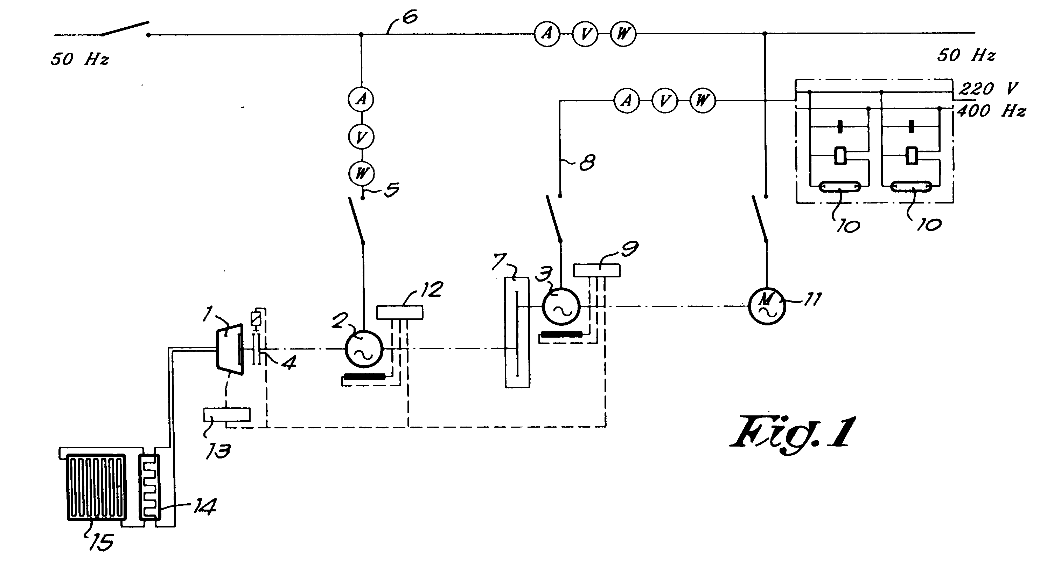

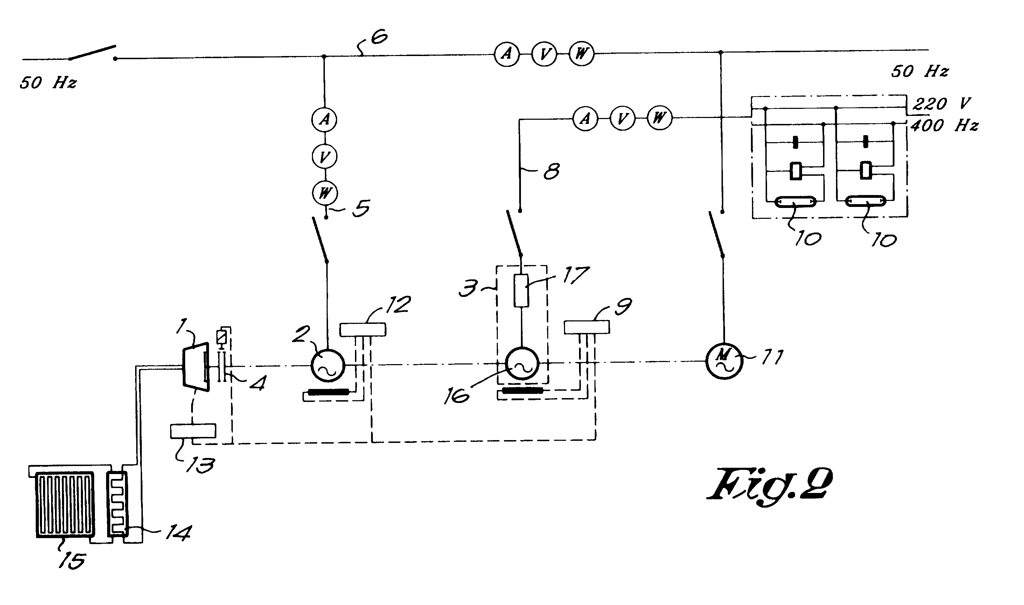

In the form of embodiment according to figure 1, the current generator 3 is also an electromechanical current generator. It is, then, connected to the current generator 2 over a reductor 7 or gear-wheel system. In the form of embodiment according to figure 2, the current generator 3 is formed by an electromechanical current generator 16 as such and an electronic frequency-transformer 17 coupled to it. The electromechanical current generator 16 may have the same frequency as the electromechanical current generator 2, but for instance comprise another number of phases. It may, then, also be directly coupled to the current generator 2, without reductor or gear-wheel system. In both cases, the current generator 3 supplies its own circuit 8 of 400 Hz. A control system 9 can adjust, for example, the voltage of the network 8. This circuit can be a D.C. circuit as well as an A.C. circuit, and the current generator 3 thus can be a D.C. generator as well as an A.C. generator.

Within this circuit, a number of high pressure sodium discharge lamps 10 are switched, which provide the assimilation illumination of the green house with an illuminating capacity of, for example, 36 W/m².

A starting engine 11 is provided for starting, if desired, without the combustion engine 1 and the current generators 2 and 3 and for synchronizing, if synchronous generators are used.

If heat and 400 Hz electric energy is necessary, the current generators 2 and 3 then are coupled to each other and to the combustion engine 1. In the first form of embodiment according to figure 1, by means of the reductor 7, the generator 3 can be driven on a higher speed than the generator 2.

By means of the control 9, the circuit voltage of the high frequency current generator 3 can be adjusted in function of an external parameter, for example the daylight. This control 9 can be coupled to the controls 12 and 13 of the current generator 2 respectively the combustion engine 1.

The current generator 2 at network frequency can feed electric energy into the public network by means of the lines 5. The other current generator 3 feeds the separate circuit 8.

By uncoupling the coupling 4, the combustion engine 1 can be uncoupled. The current generator 2 can be used as a motor which is fed, by means of the lines 5, by the public network 6 and which drives the 400 Hz current generator 3.

If the generator 2 is switched to the public network 6, this has a favourable effect onto the stability of the circuit 8 in that current fluctuations can be compensated. In this circuit 8, less voltage and frequency fluctuations will be present which, for example, might lead to obstructive flicker effects in the illumination. The combustion engine 1, then, can also work on a scheme which is completely independent from the charge in the circuit 8. All this makes it possible to chose the engine's work in a flexible way, such, that the heat demand is satisfied or that a maximum of engine efficiency is achieved.

The arrangement described above shows a relatively simple construction and allows, especially in those cases where there is a demand for heat as well as an electric consumption, to achieve an optimum efficiency, and especially an electric consumption with a higher efficiency at a higher frequency, such, that the complete arrangement is economically and energetically interesting. Waste heat from the combustion engine can be used for heating.

The invention is in no way limited to the aforegoing described embodiment, and within the scope of the patent application, this embodiment can undergo a lot of alterations.

Particularly the use of the arrangement is not limited to the heating of green houses and the supply of their assimilation illumination systems. The arrangement may also be used in other cases, especially in the cases, where thermic energy as well as electric energy are required and the electric energy is efficient at another frequency. Thus, the arrangement can be used by the chemical industry for heating, on one hand, and the supply of compressors or electrolytic units, on the other hand, or by the metal producing and working industries, for induction melting installations and/or rolling installations.

Also, it is not absolutely necessary that one of the current generators is connected to the public network. It can also be connected to an own circuit.

The electromechanical current generators do not necessarily have to be A.C. generators. They may also be electromechanical D.C. generators.

The driving device does not necessarily have to be a combustion engine and even not necessarily with internal combustion.

## Claims

1. Arrangement for the generation of electric energy, which arrangement comprises a driving device (1), at least two current generators (2, 3) and a coupling (4) between this driving device (1) and these current generators (2, 3), characterized in that the current generators (2, 3) are generators with different frequency.

2. Arrangement according to the previous claim, characterized in that one current generator (2) is a generator which supplies current with the frequency of the public network (6), while the other current generator (3) is a generator supplying current at a higher frequency.

3. Arrangement according to the previous claim, characterized in that this higher frequency is 400 +/- 40 Hz.

4. Arrangement according to any one of the previous claims, characterized in that the two current generators (2 and 3) are electromechanical current generators.

5. Arrangement according to any one of the claims 1 to 3, characterized in that one current generator (2) is an electromechanical current generator, while the other current generator (3) is formed by an electromechanical current generator (16) as such and an electronic frequency-transformer (17).

6. Arrangement according to any one of the previous claims 4 and 5, characterized in that it comprises a reductor (7) or gear-wheel system between the two electromechanical current generators (2 and 3, or 16).

7. Arrangement according to any one of the previous claims, characterized in that the coupling (4) with which the current generators (2) are coupled to the driving device (1), is of the type which can be uncoupled, while one of the current generators (2) is connected to the public network (6).

8. Arrangement according to any one of the claims 4 and 5 and according to the previous claim, characterized in that the electromechanical current generators (2 and 3, or 16) are synchronous current generators and the arrangement comprises a starting engine (11) for starting the current generators (2 and 3, or 16) independent from the driving device (1).

9. Arrangement according to any one of the previous claims, characterized in that the driving device (1) is part of a heat/power coupling installation.

10. Arrangement according to any one of the previous claims, characterized in that one of the current generators (3) supplies an own circuit (8) and that the arrangement comprises a control system (9) for the control of the circuit voltage of this circuit (8) in function of an external parameter.

11. Arrangement according to the previous claim, characterized in that one of the current generators (3) supplies an own circuit (8) in which fluorescent lighting devices (10) are mounted and in which the control system (9) controls the voltage of this circuit (8) in function of the daylight.

## Patentansprüche

1. Anordnung zur Erzeugung von elektrischer Energie, welche Anordnung eine Antriebsvorrichtung (1), zumindest zwei Stromgeneratoren (2, 3) und eine Koppelung (4) zwischen dieser Antriebsvorrichtung (1) und diesen Stromgeneratoren (2, 3) umfaßt, dadurch gekennzeichnet, daß die Stromgeneratoren (2, 3) Generatoren mit unterschiedlicher Frequenz sind.

2. Anordnung gemäß dem vorgenannten Anspruch, dadurch gekennzeichnet, daß ein Stromgenerator (2) ein Generator ist, der Strom mit der Frequenz des öffentlichen Netzes (6) liefert, während der andere Stromgenerator (3) ein Generator ist, der Strom mit einer höheren Frequenz liefert.

3. Anordnung gemäß dem vorgenannten Anspruch, dadurch gekennzeichnet, daß diese höhere Frequenz 400 +/- 40 Hz ist.

4. Anordnung gemäß einem der vorgenannten Ansprüche, dadurch gekennzeichnet, daß die zwei Stromgeneratoren (2 und 3) elektromechanische Stromgeneratoren sind.

5. Anordnung gemäß einem der Ansprüche 1 bis 3, dadurch gekennzeichnet, daß ein Stromgenerator (2) ein elektromechanischer Stromgenerator ist, während der andere Stromgenerator (3) durch einen elektromechanischen Stromgenerator (16) als solchen und einen elektronischen Frequenzumformer (17) gebildet wird.

6. Anordnung gemäß einem der vorgenannten Ansprüche 4 und 5, dadurch gekennzeichnet, daß sie einen Reduktor (7) oder Zahnradsystem zwischen den zwei elektromechanischen Stromgeneratoren (2 und 3, oder 16) umfaßt.

7. Anordnung gemäß einem der vorgenannten Ansprüche, dadurch gekennzeichnet, daß die Koppelung (4), womit die Stromgeneratoren (2) an die Antriebsvorrichtung (1) gekoppelt werden, des Typs ist, der abgekoppelt werden kann, während einer der Stromgeneratoren (2) mit dem öffentlichen Netz (6) verbunden ist.

8. Anordnung gemäß einem der Ansprüche 4 und 5 und gemäß dem vorgenannten Anspruch, dadurch gekennzeichnet, daß die elektromechanischen Stromgeneratoren (2 und 3, oder 16) Synchron-Stromgeneratoren sind und die Anordnung einen Anlaufmotor (11) zum Anfahren der Stromgeneratoren (2 und 3, oder 16) unabhängig von der Antriebsvorrichtung (1) umfaßt.

9. Anordnung gemäß einem der vorgenannten Ansprüche, dadurch gekennzeichnet, daß die Antriebsvorrichtung (1) Teil einer Wärme-/Kraft-Koppelungsanlage ist.

10. Anordnung gemäß einem der vorgenannten Ansprüche, dadurch gekennzeichnet, daß einer der Stromgeneratoren (3) einen eigenen Stromkreis (8) speist und daß die Anordnung ein Steuerungssystem (9) für die Steuerung der Betriebsspannung dieses Stromkreises (8) in Funktion eines externen Parameters umfaßt.

11. Anordnung gemäß dem vorgenannten Anspruch, dadurch gekennzeichnet, daß einer der Stromgeneratoren (3) einen eigenen Stromkreis (8) speist, worin fluoreszierende Leuchtvorrichtungen (10) montiert sind und worin das Steuerungssystem (9) die Spannung dieses Stromkreises (8) in Funktion des Tageslichts steuert.

## Revendications

1. Arrangement pour la génération d'énergie électrique, ledit arrangement comprenant un dispositif de commande (1), au moins deux générateurs de courant (2, 3) et un couplage (4) entre ce dispositif de commande (1) et ces générateurs de courant (2, 3), caractérisé en ce que les générateurs de courant (2, 3) sont des générateurs à fréquence différente.

2. Arrangement selon la revendication précédente, caractérisé en ce qu'un générateur de courant (2) est un générateur qui fournit du courant à la fréquence du réseau public (6), tandis que l'autre générateur de courant (3) est un générateur fournissant du courant à une fréquence supérieure.

3. Arrangement selon la revendication précédente, caractérisé en ce que cette fréquence supérieure est de 400 +/- 40 Hz.

4. Arrangement selon l'une quelconque des revendications précédentes, caractérisé en ce que les deux générateurs de courant (2 et 3) sont des générateurs de courant électromécaniques.

5. Arrangement selon l'une quelconque des revendications 1 à 3, caractérisé en ce qu'un générateur de courant (2) est un générateur de courant électromécanique, tandis que l'autre générateur de courant (3) est formé par un générateur de courant électromécanique (16) comme tel et par un transformateur de fréquence électronique (17).

6. Arrangement selon l'une quelconque des revendications précédentes (4 et 5), caractérisé en ce qu'il comprend un réducteur (7) ou un système à roue de transmission entre les deux générateurs de courant électromécaniques (2 et 3 ou 16).

7. Arrangement selon l'une quelconque des revendications précédentes, caractérisé en ce que le couplage (4), à l'aide duquel les générateurs de courant (2) sont couplés au dispositif de commande (1), est du type qui peut être découplé, tandis qu'un des générateurs de courant (2) est raccordé au réseau public (6).

8. Arrangement selon l'une quelconque des revendications 4 et 5 et selon la revendication précédente, caractérisé en ce que les générateurs de courant électromécaniques (2 et 3 ou 16) sont des générateurs de courant synchrones, et l'arrangement comprend un moteur de démarrage (11) pour le démarrage des générateurs de courant (2 et 3 ou 16), indépendamment du dispositif de commande (1).

9. Arrangement selon l'une quelconque des revendications précédentes, caractérisé en ce que le dispositif de commande (1) fait partie d'une installation jumelant chaleur/courant.

10. Arrangement selon l'une quelconque des revendications précédentes, caractérisé en ce qu'un des générateurs de courant (3) alimente un circuit propre (8) et en ce que l'arrangement comprend un système de réglage (9) pour le réglage de la tension de ce circuit (8) en fonction d'un paramètre externe.

11. Arrangement selon l'une quelconque des revendications précédentes, caractérisé en ce qu'un des générateurs de courant (3) alimente un circuit propre (8) dans lequel sont montés des dispositifs (10) d'éclairage par fluorescence et dans lequel le système de réglage (9) règle la tension de ce circuit (8) en fonction de la lumière du jour.
